# EUROPEAN PATENT SPECIFICATION

(11) **EP 2 876 268 B1**
(45) Date of publication and mention of the grant of the patent: **06.05.2020**
(21) Application number: 13822137.9
(22) Date of filing: 09.07.2013
(51) Int. Cl.: F01K 23/04, F01D 17/00, F01K 13/02, F01K 7/14, F01K 9/00, F01K 25/08

(54) **COMBINED POWER DEVICE AND METHOD FOR OPERATING COMBINED POWER DEVICE**
KOMBINIERTE STROMVORRICHTUNG UND VERFAHREN ZUM BETREIBEN DER KOMBINIERTEN STROMVORRICHTUNG
DISPOSITIF ÉLECTRIQUE COMBINÉ ET PROCÉDÉ PERMETTANT D'ACTIONNER LE DISPOSITIF ÉLECTRIQUE COMBINÉ

(30) Priority: 23.07.2012 JP 2012162643
(43) Date of publication of application: 27.05.2015
(73) Proprietor: Kabushiki Kaisha Kobe Seiko Sho (Kobe Steel, Ltd.), Kobe-shi, Hyogo 651-8585 (JP)
(72) Inventor: NISHIMURA, Makoto, Kobe-shi, Hyogo 651-2271 (JP); UEHARA, Katsuhiro, Takasago-shi, Hyogo 676-8670 (JP); MATSUTANI, Osamu, Takasago-shi, Hyogo 676-8670 (JP)
(74) Representative: TBK
(86) International application number: PCT/JP2013/068792
(87) International publication number: WO 2014/017293

(56) References cited:
- WO-A1-2011/030285
- JP-A- S6 226 304
- JP-A- H11 125 172
- JP-A- 2000 145 408
- JP-A- 2005 030 727
- JP-A- 2005 133 702
- JP-A- 2010 048 129
- JP-A- 2012 127 231
- JP-A- 2013 011 272
- US-A- 5 483 797
- US-A- 6 035 643

## Description

### TECHNICAL FIELD

The present invention relates to combined power apparatuses that combine Rankine cycle apparatuses and binary cycle apparatuses, and methods of operating combined power apparatuses.

### BACKGROUND ART

Conventionally, in thermal, nuclear, or other power plants, heat generated from a heat source is recovered to rotationally drive a steam turbine, and a rotational driving force generated is used for electric power generation. In manufacturing sites or the like, in some cases, steam generated by a boiler or the like is used as a power source to rotationally drive a steam turbine. A thermodynamic cycle like this in which a steam turbine is driven by high-temperature steam to extract power is called the Rankine cycle. An apparatus that uses the Rankine cycle to extract power is called a Rankine cycle apparatus.

On the other hand, thermodynamic cycles in which a power source that does not have an amount of heat enough to rotationally drive a steam turbine is used to generate power or generate electricity include a binary cycle. A binary cycle apparatus using the binary cycle uses an organic solvent having a low boiling point that evaporates at a low temperature lower than or equal to 100°C as a working medium, and is used as a secondary or auxiliary power generating system, electric generating system, or the like in a relatively small factory or the like.

A combined power apparatus that combines a Rankine cycle apparatus for a relatively high-temperature heat source and a binary cycle apparatus for a low-temperature heat source for generating power or generating electricity with a high degree of efficiency has been hitherto conceived.

For example, Patent Document 1 discloses a combined power generating system that combines a gas turbine, a Rankine cycle, and a binary cycle to be able to recover power or electricity from a heat source with a high degree of efficiency.

Patent Document 2 discloses a combined cycle application that combines a low pressure Rankine cycle and an organic Rankine cycle. While the low pressure Rankine cycle will be operating between 315.5°C and 107°C ambient pressure exhaust, the steam is expanded down at ambient pressure and a saturation temperature of 104°C at exhaust by adjusting a mass flow through the organic Rankine cycle.

Patent Document 3 discloses a geothermal power apparatus that combines a steam turbine that expands geothermal steam generated to generate power and an organic vapor turbine that recovers thermal energy contained in the steam expanded by the steam turbine and uses the recovered thermal energy to generate power. The geothermal power apparatus has the features specified in the preamble of claim 1.

### CITATION LIST

### PATENT DOCUMENT

Patent Document 1: JP H07 166815 A
Patent Document 2: US 6 035 643 A
Patent Document 3: US 5 483 797 A

### SUMMARY OF THE INVENTION

### TECHNICAL PROBLEM

The combined power generating system in Patent Document 1 recovers surplus thermal energy from a Rankine cycle apparatus on the high-temperature side, using a heat exchanger, and uses the recovered thermal energy to generate power or generate electricity by a binary cycle apparatus on the low-temperature side, for example.

However, when it is used for a Rankine cycle apparatus using a steam turbine as in Patent Document 1, disadvantages as described below have emerged as actual results in the field.

Specifically, as steam to be introduced into a steam turbine, superheated steam heated to a temperature/pressure higher than that of saturated steam is generally used. In the Rankine cycle apparatus, in order to exert a high adiabatic efficiency and power generation efficiency, superheated steam is expanded at a stroke to a temperature lower than or equal to 100°C or a pressure lower than or equal to atmospheric pressure in a steam turbine (expansion machine) to generate a driving force. Consequently, in the Rankine cycle apparatus, steam after being expanded by the steam turbine largely decreases in volume, extremely lowering pressure in a condenser provided in a path from the outlet side of the steam turbine to a pump. As a result, the pressure inside the condenser becomes close to a vacuum, causing the necessity to use an airtight structure for the condenser or causing the necessity to increase the heat-transfer area of the condenser to allow heat transfer with steam of low density (namely, liquid water), and thus the size of the condenser structure is likely to increase.

In particular, a power generating system using renewable energy or the like is often installed individually for each small-scale user rather than being intensively installed at a place on a large scale. For such a power generating system, a relatively compact one is often demanded. Therefore, in consideration of wide use of a power generating system best suited to a small-scale user, not only a property of being highly efficient but also a property such as allowing easy operation or needing a small installation space, for example, are strongly demanded of the power generating system.

The technique in Patent Document 1 is intended for a large-scale power generating system (such as a power plant) for generating commercial power, and cannot respond to such a situation.

The present invention has been made in view of the above-described problem, and has an object of providing a combined power apparatus that can generate power or electricity with a high degree of efficiency without taking much installation space, and a method of operating the combined power apparatus.

### SOLUTION TO PROBLEM

To solve the above-described problem, a combined power apparatus of the present invention takes technical means as below.

Specifically, a combined power apparatus of the present invention is a combined power apparatus that has the features set forth in claim 1.

The expansion machine provided in the Rankine cycle apparatus expands steam generated, thereby generating a rotational driving force, and the Rankine cycle apparatus is preferably provided with a pump for returning steam after being expanded by the expansion machine.

Preferably, the binary cycle apparatus includes a first heat exchanger for guiding steam after being expanded by the expansion machine provided in the Rankine cycle apparatus to a primary side to evaporate a working medium fed to a secondary side, an expansion machine for expanding steam of the working medium evaporated by the first heat exchanger to generate a rotational driving force, a second heat exchanger for cooling steam of the working medium expanded by the expansion machine of the binary cycle apparatus to condense the working medium to liquid, and a pump for returning the working medium from the second heat exchanger to the first heat exchanger.

Preferably, the controller includes a working medium flow adjustment unit capable of adjusting the flow rate of the working medium circulating through the pump provided in the binary cycle apparatus, and the adjustment control unit is capable of adjusting the flow rate of the working medium circulating through the pump provided in the binary cycle apparatus by the working medium flow adjustment unit so that the temperature of steam after being expanded by the expansion machine provided in the Rankine cycle apparatus becomes 100°C or higher, based on the temperature of the steam measured by the measurement unit.

Preferably, the controller includes a rotational speed adjustment unit capable of adjusting the rotational speed of the expansion machine provided in the binary cycle apparatus, and the adjustment control unit is capable of adjusting the rotational speed of the expansion machine by the rotational speed adjustment unit so that the temperature of steam after being expanded by the expansion machine provided in the Rankine cycle apparatus becomes 100°C or higher, based on the temperature of the steam measured by the measurement unit.

Preferably, the controller includes a cooling water flow adjustment unit for adjusting the flow rate of cooling water fed to the second heat exchanger of the binary cycle apparatus, and the adjustment control unit is capable of adjusting the flow rate of the cooling water fed to the second heat exchanger of the binary cycle apparatus by the cooling water flow adjustment unit so that the temperature of steam after being expanded by the expansion machine provided in the Rankine cycle apparatus becomes 100°C or higher, based on the temperature of the steam measured by the measurement unit.

Preferably, the controller includes a bypass pipe that allows a portion of steam circulating through the Rankine cycle apparatus to merge with cooling water to be fed to the second heat exchanger of the binary cycle apparatus to change the temperature of the cooling water, a cooling water temperature adjustment unit for adjusting the flow rate of steam circulating through the bypass pipe and returning to the cooling water side, and the adjustment control unit is capable of adjusting the flow rate of steam circulating through the bypass pipe by the cooling water temperature adjustment unit so that the temperature of steam after being expanded by the expansion machine provided in the Rankine cycle apparatus becomes 100°C or higher, based on the temperature of the steam measured by the measurement unit.

Preferably, a generator to which a rotational driving force generated by the expansion machine provided in the Rankine cycle apparatus and a rotational driving force generated by the expansion machine provided in the binary cycle apparatus are both transmitted is included.

On the other hand, a method of operating a combined power apparatus of the present invention is a method of operating a combined power apparatus for generating power, using the above-described combined power apparatus, and includes adjusting the amount of thermal energy recovered by the binary cycle apparatus so that the temperature of steam after being expanded by the expansion machine provided in the Rankine cycle apparatus becomes 100°C or higher.

### ADVANTAGEOUS EFFECT OF INVENTION

A combined power apparatus and a method of operating a combined power apparatus of the present invention can generate power or electricity with a high degree of efficiency without taking much installation space.

### BRIEF DESCRIPTION OF DRAWINGS

[Fig. 1] Fig. 1 shows a combined power apparatus in a first embodiment.
[Fig. 2] Fig. 2 is a graph in which effects of steam temperatures on the outlet side of an expansion machine on adiabatic efficiency are compared between the combined power apparatus in the first embodiment and a conventional Rankine cycle apparatus.
[Fig. 3] Fig. 3 shows a modification of the combined power apparatus in the first embodiment.
[Fig. 4] Fig. 4 shows a combined power apparatus in a second embodiment.
[Fig. 5] Fig. 5 shows a combined power apparatus in a third embodiment.
[Fig. 6] Fig. 6 shows a combined power apparatus in a fourth embodiment.

### DESCRIPTION OF EMBODIMENTS

Hereinafter, embodiments of a combined power apparatus 1 and a method of operating the combined power apparatus 1 of the present invention will be described in detail with reference to the drawings.

### [First Embodiment]

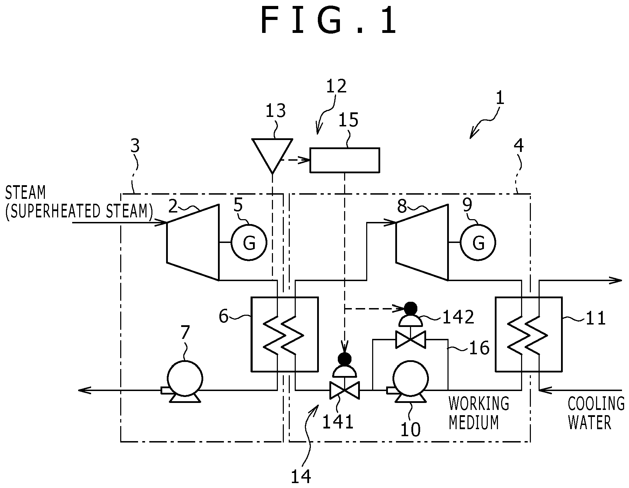

Fig. 1 schematically illustrates a combined power apparatus 1 in a first embodiment.

As shown in Fig. 1, the combined power apparatus 1 in the first embodiment is a combination of a Rankine cycle apparatus 3 and a binary cycle apparatus 4. The Rankine cycle apparatus 3 includes an expansion machine 2 (steam turbine) for expanding steam generated to generate power. The binary cycle apparatus 4 generates power by recovering a portion of thermal energy contained in the steam expanded by the expansion machine 2 and using the recovered thermal energy.

The Rankine cycle apparatus 3 is a portion provided on the left side of the space in Fig. 1 and enclosed with a chain line in the figure. The Rankine cycle apparatus 3 rotationally drives the expansion machine 2 (steam turbine), using superheated steam, thereby generating power or electricity. In the first embodiment, a power generating system that generates electric power, using power generated is illustrated.

Specifically, the Rankine cycle apparatus 3 includes an evaporator such as a boiler not shown in addition to the expansion machine 2, a generator 5, a first heat exchanger 6, and a pump 7. The evaporator can not only generate saturated steam by heating water (ion-exchange water or pure water), but also generate superheated steam by heating the saturated steam further. Superheated steam generated by the boiler is sent to the expansion machine 2.

In the description below, the word "first" is prefixed to the expansion machine 2, the generator 5, and the pump 7 on the Rankine cycle apparatus 3 side for designation. The word "second" is prefixed to an expansion machine 8, a generator 9, and a pump 10 on the side of the binary cycle apparatus 4 described below for designation. With this, confusion between members of both the cycle apparatuses is avoided. In the description below, the expression "steam" includes not only superheated steam but also saturated steam and wet steam.

The first expansion machine 2 (expansion machine, or a steam turbine, on the Rankine cycle apparatus side) generates a rotational driving force by expanding steam, and converts thermal energy of steam into kinetic energy. At the side of the first expansion machine 2 is located the first generator 5 (generator on the Rankine cycle apparatus side) to which the rotational driving force of the first expansion machine 2 is transmitted through a rotating shaft of the first expansion machine 2. The first generator 5 further generates electricity, using the rotational driving force generated by the first expansion machine 2. Steam after being expanded by the first expansion machine 2 is sent to the first heat exchanger 6.

The first heat exchanger 6 recovers a portion of thermal energy generated by the Rankine cycle apparatus 3 for transfer to the binary cycle apparatus 4. Steam after being expanded by the first expansion machine 2 is fed to the primary side of the first heat exchanger 6, and a working medium in the binary cycle apparatus 4 described below is fed in a liquid state to the secondary side of the first heat exchanger 6. In other words, the first heat exchanger 6 also serves as a condenser for cooling and condensing steam in the Rankine cycle apparatus 3. Steam after completion of heat exchange (cooling) in the first heat exchanger 6 returns to the above-described evaporator through the first pump 7 (pump on the Rankine cycle apparatus side).

On the other hand, the binary cycle apparatus 4 is a portion provided on the right side of the space in Fig. 1, enclosed by a chain double-dashed line in the figure. The binary cycle apparatus 4 uses an organic solvent having a low boiling point such as an alternative fluorocarbon or hexane as a working medium, and generates a rotational driving force by expanding the working medium by the expansion machine (second expansion machine 8). In the first embodiment, the binary cycle apparatus 4 is also shown as a power generating system that generates electric power, using power generated like the Rankine cycle apparatus 3. The binary cycle apparatus 4 includes a generator (second generator 9).

Specifically, the binary cycle apparatus 4 includes the first heat exchanger 6, the second expansion machine 8, the second generator 9, a second heat exchanger 11, and the second pump 10.

The first heat exchanger 6 cools steam in the Rankine cycle apparatus 3 while recovering thermal energy from this steam as described above, and evaporates the working medium having the low boiling point, using the recovered thermal energy. That is, the first heat exchanger 6 also serves as an evaporator of the binary cycle apparatus 4 for generating steam of the working medium. The steam of the working medium generated by the first heat exchanger 6 is sent to the second expansion machine 8 (expansion machine on the binary cycle apparatus side).

The second expansion machine 8 expands the steam of the working medium, converting a portion of the thermal energy recovered from the Rankine cycle apparatus 3 side into kinetic energy, and generating a rotational driving force. At the side of the second expansion machine 8 is located the second generator 9 (generator on the binary cycle apparatus side) to which the rotational driving force generated by the second expansion machine 8 is transmitted. The second generator 9 also generates electricity like the first generator 5. The working medium after being expanded by the second expansion machine 8 is sent to the second heat exchanger 11.

The second heat exchanger 11 cools and condenses steam of the working medium after being expanded by the second expansion machine 8, condensing the gaseous working medium into liquid. Steam of the working medium after being expanded by the second expansion machine 8 is fed to the primary side of the second heat exchanger 11, and cooling water is fed to the secondary side of the second heat exchanger 11 for heat exchange between them. In other words, the second heat exchanger 11 constitutes a condenser for condensing the working medium into liquid. The liquid of the working medium generated by the second heat exchanger 11 returns to the above-described first heat exchanger 6 through the second pump 10 (pump on the binary cycle apparatus side). Thereafter, the working medium evaporates again in the first heat exchanger 6, returning to gas.

In the combined power apparatus 1 that combines the Rankine cycle apparatus 3 and the binary cycle apparatus 4 as described above, first, in the Rankine cycle apparatus 3, a portion of the thermal energy of superheated steam is recovered to generate power (electricity). Then, in the binary cycle apparatus 4, thermal energy is further recovered from the steam after being expanded in the Rankine cycle apparatus 3. In other words, the binary cycle apparatus 4 recovers a portion of the remaining thermal energy that has not been able to be recovered by the Rankine cycle apparatus 3, and generates power (electricity), using the recovered thermal energy also on the binary cycle apparatus 4 side.

That is, in the above-described combined power apparatus 1, power conversion efficiency and power generation efficiency become higher by the amount of power (electricity) generated by the binary cycle apparatus 4 than those when power (electricity) is generated solely by the Rankine cycle apparatus 3, allowing generation of more power or electricity.

However, when the Rankine cycle apparatus 3 that rotationally drives the steam turbine, using superheated steam is used, superheated steam expanded by the expansion machine 2 to a temperature lower than or equal to 100°C, or to a pressure lower than or equal to atmospheric pressure to generate a driving force can cause disadvantages as below.

Specifically, steam expanded to a temperature lower than or equal to 100°C, or to a pressure lower than or equal to atmospheric pressure on the outlet side of the first expansion machine 2 has decreased largely in volume. Consequently, in a conventional power apparatus constituted only by a Rankine cycle apparatus, steam pressure in a condenser provided in a path from the outlet side of an expansion machine to a pump becomes extremely low. As a result, pressure inside the condenser becomes close to a vacuum, causing the necessity to use an airtight structure for the condenser, or causing the necessity to increase the heat-transfer area of the condenser to allow heat transfer with steam of low density, and thus the size of the condenser structure is likely to increase.

Thus, the combined power apparatus 1 of the present invention is provided with a controller 12 for adjusting the amount of thermal energy recovered from the Rankine cycle apparatus 3 by the binary cycle apparatus 4 so that the temperature of steam after being expanded by the first expansion machine 2 provided in the Rankine cycle apparatus 3 becomes 100°C or higher.

The controller 12 adjusts the amount of thermal energy recovered from the Rankine cycle apparatus 3 by the binary cycle apparatus 4 by changing the flow rate or temperature of the working medium circulating in the binary cycle apparatus 4, or changing the flow rate or temperature of the cooling water fed to the binary cycle apparatus 4.

The controller 12 provided to the combined power apparatus 1 in the first embodiment adjusts the amount of thermal energy recovered by the binary cycle apparatus 4 by changing the flow rate of the working medium circulating through the pump provided in the binary cycle apparatus 4.

Specifically, the controller 12 includes a measurement unit 13, a working medium flow adjustment unit 14, and an adjustment control unit 15. The measurement unit 13 measures the temperature of steam and optionally the pressure of steam circulating on the outlet side of the expansion machine 2 provided in the Rankine cycle apparatus 3. The working medium flow adjustment unit 14 can adjust the flow rate of the working medium circulating through the pump provided in the binary cycle apparatus 4. The adjustment control unit 15 sends a command to the working medium flow adjustment unit 14 so that the temperature of steam after being expanded by the expansion machine 2 provided in the Rankine cycle apparatus 3 becomes 100°C or higher, based on the temperature of steam measured by the measurement unit 13. Thus, the adjustment control unit 15 adjusts the flow rate of the working medium circulating through the pump (second pump 10) provided in the binary cycle apparatus 4.

Next, the measurement unit 13, the working medium flow adjustment unit 14, and the adjustment control unit 15 constituting the controller 12 in the first embodiment will be described in detail.

The measurement unit 13 is a temperature sensor for measuring the temperature of steam, a pressure sensor for measuring the pressure of steam, or a combination of the temperature sensor and the pressure sensor, provided in a pipe on the outlet side of the first expansion machine 2, and measures the temperature of steam and optionally the pressure of steam after expansion. Measurement data on temperature and optionally pressure measured by the measurement unit 13 is sent to the adjustment control unit 15 described below.

The working medium flow adjustment unit 14 adjusts the flow rate of the working medium circulating through the second pump, and can use either of two flow regulating valves 141 and 142 as shown in the figure, or both of them.

Specifically, the first flow regulating valve 141 is a flow regulating valve of a servo type or the like that can adjust the valve opening according to a signal from the adjustment control unit 15. The first flow regulating valve 141 is provided in a pipe extending from the second pump 10 in the binary cycle apparatus 4 to the first heat exchanger 6, and adjusts the flow rate of the working medium circulating from the second pump 10 to the first heat exchanger 6, in other words, the circulation flow rate of the working medium circulating in the binary cycle apparatus 4.

A bypass pipe 16 that allows the working medium to directly return to the upstream side without passing through the second pump 10 is provided between a pipe located upstream side of the second pump 10 and a pipe located downstream side in the binary cycle apparatus 4. The second flow regulating valve 142 is a flow regulating valve provided in the bypass pipe 16 and can adjust the valve opening according to a signal from the adjustment control unit 15, like the first flow regulating valve 141. The second flow regulating valve 142 like this allows adjustment of the flow rate (return flow rate) of the working medium returning from the downstream side to the upstream side of the second pump 10 through the bypass pipe 16, and consequently allows adjustment of the flow rate of the working medium circulating from the second pump 10 to the first heat exchanger 6.

As the above-described working medium flow adjustment unit 14, either of the two flow regulating valves 141 and 142 may be used, or both of them may be used.

The adjustment control unit 15 sends a command to the working medium flow adjustment unit 14 so that the temperature of steam after being expanded by the first expansion machine 2 provided in the Rankine cycle apparatus 3 becomes 100°C or higher, based on the temperature of steam measured by the above-described measurement unit 13. According to the command, the working medium flow adjustment unit 14 (first flow regulating valve and/or second flow regulating valve) adjusts the flow rate of the working medium circulating through the second pump 10 provided in the binary cycle apparatus 4. As the adjustment control unit 15, for example, a personal computer or a PLC may be used.

Next, signal processing performed in the adjustment control unit 15, and more specifically, an operating method performed in the combined power apparatus 1 in the first embodiment will be described.

In the operating method performed in the combined power apparatus 1 in the first embodiment, first, using the measurement unit 13, the temperature and optionally the pressure of steam circulating on the outlet side of the expansion machine 2 are measured. Measurement data on the measured temperature and optionally the pressure is sent to the adjustment control unit 15.

When the temperature measured by the measurement unit 13 becomes lower than 100°C, the adjustment control unit 15 sends a command to the working medium flow adjustment unit 14. According to the command, the working medium flow adjustment unit 14 changes the flow rate of the working medium circulating from the second pump 10 to the first heat exchanger 6, thereby adjusting the amount of thermal energy recovered by the binary cycle apparatus 4.

The pressure measured by the measurement unit 13 being "atmospheric pressure" means that absolute pressure is 0.1 MPa.

Specifically, when the temperature measured by the measurement unit 13 becomes lower than 100°C, the adjustment control unit 15 sends a command to the working medium flow adjustment unit 14. According to the command, the working medium flow adjustment unit 14 decreases the flow rate of the working medium circulating from the second pump 10 to the first heat exchanger 6. This decreases the amount of thermal energy recovered by the binary cycle apparatus 4, and thus the amount of thermal energy in the Rankine cycle apparatus 3 does not decrease by the amount of decrease of the recovered thermal energy. As a result of this, the temperature of steam on the outlet side of the first expansion machine 2 in the Rankine cycle apparatus 3 becomes 100°C or higher.

On the other hand, when the temperature measured by the measurement unit 13 greatly exceeds 100°C, the adjustment control unit 15 sends a command to the working medium flow adjustment unit 14. According to this command, the working medium flow adjustment unit 14 increases the flow rate of the working medium circulating from the second pump 10 to the first heat exchanger 6. This increases the amount of thermal energy recovered by the binary cycle apparatus 4 side, and thus the temperature of steam on the outlet side of the first expansion machine 2 of the Rankine cycle apparatus 3 becomes about 100°C, and the pressure of steam becomes about atmospheric pressure. As a result, power (electricity) can be generated efficiently in both of the Rankine cycle apparatus 3 and the binary cycle apparatus 4 without substantially decreasing the volume of steam on the outlet side of the first expansion machine 2 of the Rankine cycle apparatus 3, eliminating the need for making the apparatus larger in size or complicated.

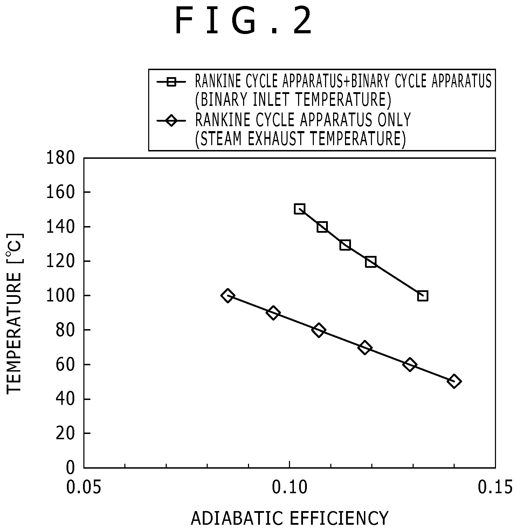

Next, with reference to Fig. 2, description will be made of the fact that the combined power apparatus 1 when being operated according to an operating method of the present invention functions substantially the same as a conventional Rankine cycle apparatus 3, in terms of efficiency (adiabatic efficiency).

Fig. 2 shows adiabatic efficiency in comparison between the case where only a Rankine cycle apparatus is used and the case where the Rankine cycle apparatus 3 and the binary cycle apparatus 4 are combined for use. As a condition, it is assumed that electric power is generated from steam at a steam temperature of 170°C and at a pressure of 0.7 MPaA.

Adiabatic efficiency when only the Rankine cycle apparatus is used is shown as rhombus marks in Fig. 2. When only the Rankine cycle apparatus is used, efficiency increases as the temperature (= pressure) of steam on the outlet side (exhaust side) of an expansion machine is decreased. From Fig. 2, when only the Rankine cycle apparatus is used, while the adiabatic efficiency at a steam exhaust temperature of 100°C is about 0.08, the adiabatic efficiency at 60°C increases to about 0.14.

Next, a trial calculation of adiabatic efficiency when the Rankine cycle apparatus 3 and the binary cycle apparatus 4 are combined for use is made. The trial calculation indicates efficiency when electric power is generated in the Rankine cycle apparatus 3 from steam at a steam temperature of 170°C and at a pressure of 0.7 MPaA to an outlet (=binary inlet) temperature of the expansion machine 2, and electric power is generated in the binary cycle apparatus 4, using the energy of the steam after expansion. The adiabatic efficiency calculated in this manner is shown as square marks in Fig. 2. From Fig. 2, while the adiabatic efficiency when the binary inlet temperature is 150°C is about 0.1, the adiabatic efficiency when the binary inlet temperature becomes 100°C becomes about 0.13. That is, an adiabatic efficiency equal to that when the temperature after expansion (steam exhaust temperature) is 60°C (the pressure is 0.08 MPaA) in the Rankine cycle apparatus 3 can be realized by the combination of the Rankine cycle apparatus 3 and the binary cycle apparatus 4 under a manageable condition that steam is at atmospheric pressure or higher.

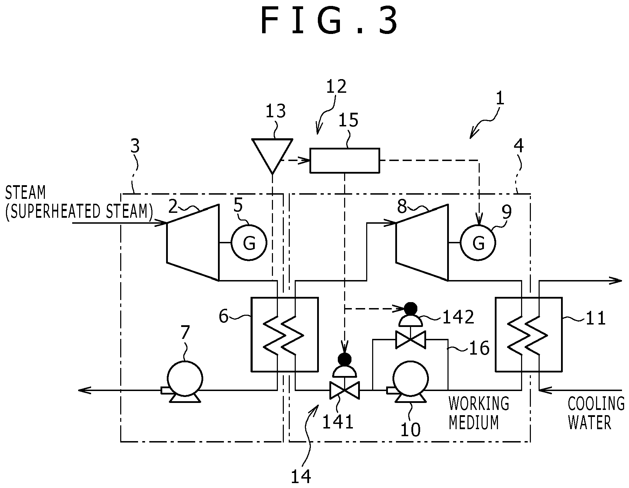

Alternatively, as shown in Fig. 3, in place of the above-described working medium flow adjustment unit 14, or in addition to the working medium flow adjustment unit 14, the adjustment control unit 15 may be configured to adjust the rotational speed of the expansion machine (second expansion machine 8) provided in the binary cycle apparatus 4. Alternatively, in place of the above-described working medium flow adjustment unit 14, or in addition to the working medium flow adjustment unit 14, a rotational speed adjustment unit (not shown) that can adjust the rotational speed of the expansion machine may be provided in the second generator 9 or the second expansion machine 8. Thus, the amount of thermal energy recovered by the binary cycle apparatus 4 can be adjusted also when the adjustment control unit 15 or the rotational speed adjustment unit applies load to the second expansion machine 8 or the second generator 9 of the binary cycle apparatus 4, decreasing the rotational speed.

When a rotational speed adjustment unit (for example, an inverter or converter) or the like that varies the magnitude of load applied according to a command from the adjustment control unit 15 is provided to the second generator 9 of the binary cycle apparatus 4, the rotational speed adjustment unit can decrease the rotational speed of the second generator 9 or the second expansion machine 8. In this way, the flow rate of the working medium varies in accordance with a variation in the rotational speed of the second expansion machine 8 or the second generator 9, thus allowing the adjustment of the amount of thermal energy recovered by the binary cycle apparatus 4.

The first flow regulating valve 141 and the second flow regulating valve 142 used as the above-described working medium flow adjustment unit 14 have not only the function as a flow regulating valve but also the function as a pressure regulating valve.

### [Second Embodiment]

Next, a combined power apparatus 1 in a second embodiment will be described.

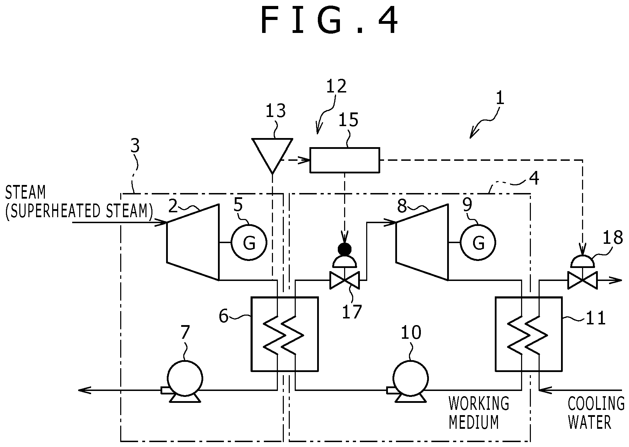

As shown in Fig. 4, a controller 12 of the combined power apparatus 1 in the second embodiment adjusts the amount of thermal energy recovered by a binary cycle apparatus 4 by changing the flow rate of cooling water fed to a second heat exchanger 11 provided in the binary cycle apparatus 4.

Specifically, the controller 12 includes a cooling water flow adjustment unit 18 and an adjustment control unit 15.

The cooling water flow adjustment unit 18 adjusts the flow rate of cooling water fed to the second heat exchanger 11 of the binary cycle apparatus 4. The cooling water flow adjustment unit 18 is a flow regulating valve of a servo type or the like that can adjust only the flow rate of cooling water fed to the second heat exchanger 11, and is openable and closable according to a command from the adjustment control unit 15.

The adjustment control unit 15 sends a command to the cooling water flow adjustment unit 18 so that the temperature of steam after being expanded by the first expansion machine 2 provided in a Rankine cycle apparatus 3 becomes 100°C or higher, based on the temperature of steam measured by the above-described measurement unit 13. According to this command, the cooling water flow adjustment unit 18 adjusts the flow rate of the cooling water fed to the second heat exchanger 11 provided in the binary cycle apparatus 4.

Specifically, when the temperature measured by the measurement unit 13 becomes lower than 100°C, the adjustment control unit 15 sends a command to the cooling water flow adjustment unit 18 to decrease the flow rate of the cooling water fed to the second heat exchanger 11. This lowers the cooling function of the second heat exchanger 11 on the working medium circulating through the binary cycle apparatus 4, increasing the temperature of the working medium circulating through the binary cycle apparatus 4. Then, the amount of thermal energy recovered by the binary cycle apparatus 4 decreases, and the amount of thermal energy in the Rankine cycle apparatus 3 increases by the amount of decrease of the recovered thermal energy. Thus, the temperature of steam on the outlet side of the first expansion machine 2 of the Rankine cycle apparatus 3 becomes 100°C or higher, and the pressure of steam becomes atmospheric pressure or higher.

On the other hand, when the temperature measured by the measurement unit 13 greatly exceeds 100°C, the adjustment control unit 15 sends a command to the cooling water flow adjustment unit 18 to increase the flow rate of the cooling water fed to the second heat exchanger 11. This increases the cooling function of the second heat exchanger 11 on the working medium circulating through the binary cycle apparatus 4, decreasing the temperature of the working medium circulating through the binary cycle apparatus 4. Then, the amount of thermal energy recovered by the binary cycle apparatus 4 increases, allowing efficient power (electricity) generation by the binary cycle apparatus 4.

Therefore, it is found that the combined power apparatus 1 in the second embodiment can also generate power while keeping excellent efficiency without decreasing the temperature of superheated steam to lower than 100°C.

In the above-described example, the amount of heat taken away from the binary cycle apparatus 4 is changed by increasing or decreasing the flow rate of the cooling water in the second heat exchanger 11, to adjust the amount of thermal energy recovered by the binary cycle apparatus 4. However, the controller 12 of the combined power apparatus 1 in the second embodiment may alternatively be configured to change the amount of heat taken into the binary cycle apparatus 4 by opening or closing a flow regulating valve 17 provided on the inlet side of the second expansion machine 8. The flow regulating valve 17 has not only the function as a flow regulating valve but also the function as a pressure regulating valve.

Other components and functions and effects achieved in the second embodiment are substantially identical to those in the first embodiment, and will not be described.

### [Third Embodiment]

Next, a combined power apparatus 1 in a third embodiment will be described.

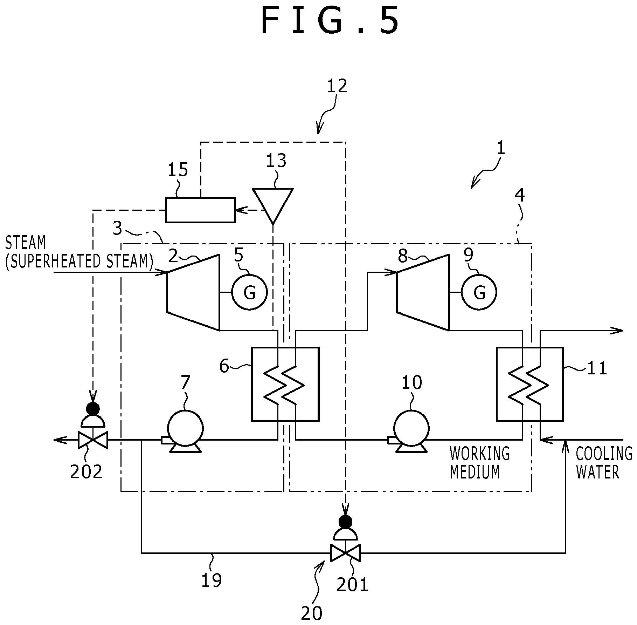

As shown in Fig. 5, a controller 12 of the combined power apparatus 1 in the third embodiment adjusts the amount of thermal energy recovered by a binary cycle apparatus 4 by changing the temperature of cooling water fed to a second heat exchanger 11 provided in the binary cycle apparatus 4.

Specifically, the controller 12 includes a bypass pipe 19, a cooling water temperature adjustment unit 20, and an adjustment control unit 15. The bypass pipe 19 allows a portion of steam circulating through a Rankine cycle apparatus 3 to merge with cooling water to be fed to the second heat exchanger 11 of the binary cycle apparatus 4, thereby changing the temperature of the cooling water. The cooling water temperature adjustment unit 20 adjusts the flow rate of steam circulating through the bypass pipe 19 and returning to the cooling water side. The adjustment control unit 15 sends a command to the cooling water temperature adjustment unit 20 so that the temperature of steam after being expanded by the expansion machine 2 provided in the Rankine cycle apparatus 3 becomes 100°C or higher, based on the temperature of steam measured by a measurement unit 13.

The bypass pipe 19 connects between the downstream side of a first pump 7 of the Rankine cycle apparatus 3 and a pipe feeding the cooling water to the second heat exchanger 11 of the binary cycle apparatus 4. The bypass pipe 19 allows a portion of steam after exchanging heat in the first heat exchanger 6 of the Rankine cycle apparatus 3 by a predetermined amount to merge with the cooling water to be fed to the second heat exchanger 11 of the binary cycle apparatus 4. This allows the temperature adjustment of the cooling water.

The cooling water temperature adjustment unit 20 in the third embodiment also constitutes a flow regulating valve that can adjust the flow rate of steam circulating through the bypass pipe 19. As the cooling water temperature adjustment unit 20, the above-described first flow regulating valve 201 provided in the bypass pipe 19, a second flow regulating valve 202 provided in a steam pipe located downstream side of a bifurcation position of the bypass pipe 19, or both of the first flow regulating valve 201 and the second flow regulating valve 202 can be used. Either of the first flow regulating valve 201 and the second flow regulating valve 202 is a flow regulating valve of a servo type or the like that can adjust the temperature of the cooling water fed to the second heat exchanger 11, and is made openable and closable according to a command from the adjustment control unit 15.

The adjustment control unit 15 sends a command to the cooling water temperature adjustment unit 20 so that the temperature of steam after being expanded by the first expansion machine 2 provided in the Rankine cycle apparatus 3 becomes 100°C or higher, based on the temperature of steam measured by the above-described measurement unit 13. According to this command, the cooling water temperature adjustment unit 20 changes the flow rate of steam returned through the bypass pipe 19, thereby adjusting the temperature of the cooling water fed to the second heat exchanger 11.

Specifically, when the temperature measured by the measurement unit 13 becomes lower than 100°C, the adjustment control unit 15 sends a command to the cooling water temperature adjustment unit 20 to increase the flow rate of steam circulating through the bypass pipe 19. This increases the flow rate of steam circulating through the bypass pipe 19, lowering the cooling function of the second heat exchanger 11 on a working medium circulating through the binary cycle apparatus 4, and increasing the temperature of the working medium circulating through the binary cycle apparatus 4. Then, the amount of thermal energy recovered by the binary cycle apparatus 4 decreases, and the amount of thermal energy of the Rankine cycle apparatus 3 increases by the amount of decrease of the recovered thermal energy. Thus, the temperature of steam on the outlet side of the first expansion machine 2 of the Rankine cycle apparatus 3 becomes 100°C or higher, and the pressure of steam becomes atmospheric pressure or higher.

On the other hand, when the temperature measured by the measurement unit 13 greatly exceeds 100°C, the adjustment control unit 15 sends a command to the cooling water temperature adjustment unit 20 to decrease the flow rate of the cooling water circulating through the bypass pipe 19. This decreases the flow rate of steam circulating through the bypass pipe 19, increasing the cooling function of the second heat exchanger 11 on the working medium circulating through the binary cycle apparatus 4, and decreasing the temperature of the working medium circulating through the binary cycle apparatus 4. Then, the amount of thermal energy recovered by the binary cycle apparatus 4 increases, and the binary cycle apparatus 4 can efficiently generate power (electricity).

Therefore, it is found that the combined power apparatus 1 in the third embodiment can also generate power (electricity) while keeping excellent efficiency without decreasing the temperature of superheated steam to lower than 100°C.

Other components and functions and effects achieved in the third embodiment are substantially identical to those in the first embodiment, and will not be described.

### [Fourth Embodiment]

Next, a combined power apparatus 1 in a fourth embodiment will be described.

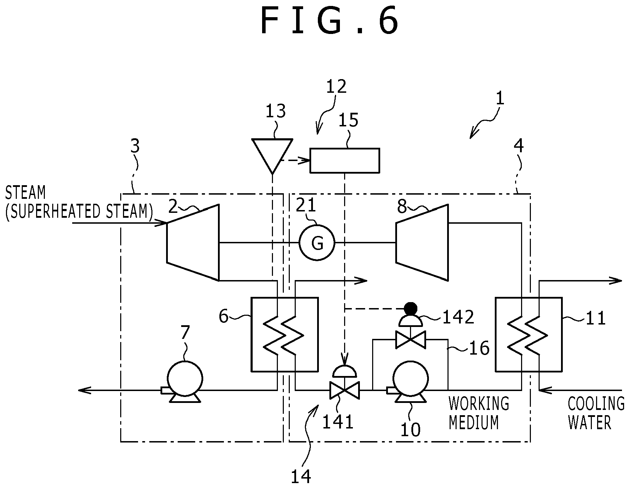

As shown in Fig. 6, the combined power apparatus 1 in the fourth embodiment includes a generator 21 to which a rotational driving force generated by an expansion machine 2 of a Rankine cycle apparatus 3 and a rotational driving force generated by an expansion machine 8 of a binary cycle apparatus 4 are both transmitted. In other words, the generator 21 is solely provided in the combined power apparatus 1 in the fourth embodiment, and is configured to serve both the function of the first generator 5 of the Rankine cycle apparatus 3 and the function of the second generator 9 of the binary cycle apparatus 4.

More specifically, the generator 21 in the fourth embodiment is interposed between a rotating shaft of the first expansion machine 2 and a rotating shaft of the second expansion machine 8, and includes a turbine in a position coaxial with either of the two rotating shafts. A rotational driving force generated by the first expansion machine 2 and a rotational driving force generated by the second expansion machine 8 are both transmitted to the generator 21, which generates power (electricity) corresponding to a driving force to which these sum up (sum total).

This configuration needs only one system of a generator, wiring to send out electricity from the generator, a device controlling the generator, or the like, allowing a further simplified device configuration of the combined power apparatus 1.

Other components and functions and effects achieved in the fourth embodiment are substantially identical to those in the first embodiment, and will not be described.

The embodiments disclosed this time should be considered illustrative in all respects, and not limiting. In particular, in the embodiments disclosed this time, matters not explicitly disclosed, for example, driving conditions, operating conditions, various parameters, the dimensions, weights, and volumes of components, and others do not depart from the scope of ordinary implementations by those skilled in the art, and values easily assumed by those skilled in the art are used.

Although the embodiments of the present invention have been described above, the present invention is not limited to the above-described embodiments, and can be implemented with various modifications to the extent described in the claims.

### EXPLANATION OF REFERENCE NUMERALS

- 1: Combined power apparatus
- 2: Expansion machine (first expansion machine)
- 3: Rankine cycle apparatus
- 4: Binary cycle apparatus
- 5: First generator
- 6: First heat exchanger
- 7: First pump
- 8: Second expansion machine
- 9: Second generator
- 10: Second pump
- 11: Second heat exchanger
- 12: Controller
- 13: Measurement unit
- 14: Working medium flow adjustment unit
- 141: First flow regulating valve
- 142: Second flow regulating valve
- 15: Adjustment control unit
- 16: Bypass pipe
- 17: Flow regulating valve
- 18: Cooling water flow adjustment unit
- 19: Bypass pipe
- 20: Cooling water temperature adjustment unit
- 201: First flow regulating valve
- 202: Second flow regulating valve
- 21: Generator

## Claims

1. A combined power apparatus (1) that combines a Rankine cycle apparatus (3) provided with an expansion machine (2) that expands steam generated to generate power and a binary cycle apparatus (4) that recovers thermal energy contained in the steam expanded by the expansion machine (2) provided in the Rankine cycle apparatus (3) and uses the recovered thermal energy to generate power, the combined power apparatus comprising:
a controller (12) for controlling the temperature of steam after being expanded by the expansion machine (2) provided in the Rankine cycle apparatus (3) to 100°C or higher, wherein
the controller (12) comprises an adjustment control unit (15) for adjusting the amount of thermal energy recovered from the Rankine cycle apparatus (3) by the binary cycle apparatus (4) so that the temperature of steam after being expanded by the expansion machine (2) provided in the Rankine cycle apparatus (3) becomes 100°C or higher,
**characterized in that**
the controller (12) further comprises a measurement unit (13) for measuring the temperature of steam circulating on the outlet side of the expansion machine (2) provided in the Rankine cycle apparatus (3), and
the adjustment control unit (15) is capable of adjusting the amount of thermal energy recovered from the Rankine cycle apparatus (3) by the binary cycle apparatus (4) so that the temperature of steam after being expanded by the expansion machine (2) provided in the Rankine cycle apparatus (3) becomes 100°C or higher, based on the temperature of the steam measured by the measurement unit (13).

2. The combined power apparatus (1) according to claim 1, wherein, during operation, the expansion machine (2) provided in the Rankine cycle apparatus (3) expands steam generated, thereby generating a rotational driving force; and
the Rankine cycle apparatus (3) is provided with a pump (7) for returning steam after being expanded by the expansion machine (2).

3. The combined power apparatus (1) according to claim 1 or 2, wherein the binary cycle apparatus (4) comprises:
a first heat exchanger (6) for guiding steam after being expanded by the expansion machine (2) provided in the Rankine cycle apparatus (3) to a primary side to evaporate a working medium fed to a secondary side;
an expansion machine (8) for expanding steam of the working medium evaporated by the first heat exchanger (6) to generate a rotational driving force;
a second heat exchanger (11) for cooling steam of the working medium expanded by the expansion machine (8) of the binary cycle apparatus (4) to condense the working medium to liquid; and
a pump (10) for returning the working medium from the second heat exchanger (11) to the first heat exchanger (6).

4. The combined power apparatus according to claim 3, wherein the controller (12) further comprises:
a working medium flow adjustment unit (14) capable of adjusting the flow rate of the working medium circulating through the pump (17) provided in the binary cycle apparatus,
wherein the adjustment control unit (15) is capable of adjusting the flow rate of the working medium circulating through the pump (10) provided in the binary cycle apparatus (4) by the working medium flow adjustment unit (14) so that the temperature of steam after being expanded by the expansion machine (2) provided in the Rankine cycle apparatus (3) becomes 100°C or higher, based on the temperature of the steam measured by the measurement unit (13).

5. The combined power apparatus (1) according to claim 3, wherein the controller (12) further comprises:
a rotational speed adjustment unit capable of adjusting the rotational speed of the expansion machine (8) provided in the binary cycle apparatus (4),
wherein the adjustment control unit (15) is capable of adjusting the rotational speed of the expansion machine (8) provided in the binary cycle apparatus (4) by the rotational speed adjustment unit so that the temperature of steam after being expanded by the expansion machine (2) provided in the Rankine cycle apparatus (3) becomes 100°C or higher, based on the temperature of the steam measured by the measurement unit (13).

6. The combined power apparatus (1) according to claim 3, wherein the controller (13) further comprises:
a cooling water flow adjustment unit (18) for adjusting the flow rate of cooling water fed to the second heat exchanger (11) of the binary cycle apparatus (4),
wherein the adjustment control unit (15) is capable of adjusting the flow rate of the cooling water fed to the second heat exchanger (11) of the binary cycle apparatus (4) by the cooling water flow adjustment unit (18) so that the temperature of steam after being expanded by the expansion machine (2) provided in the Rankine cycle apparatus (3) becomes 100°C or higher, based on the temperature of the steam measured by the measurement unit (13).

7. The combined power apparatus (1) according to claim 3, wherein the controller (12) further comprises:
a bypass pipe (19) that allows a portion of steam circulating through the Rankine cycle apparatus (3) to merge with cooling water to be fed to the second heat exchanger (11) of the binary cycle apparatus (4) to change the temperature of the cooling water; and
a cooling water temperature adjustment unit (20) for adjusting the flow rate of steam circulating through the bypass pipe (19) and returning to the cooling water side,
wherein the adjustment control unit (15) is capable of adjusting the flow rate of steam circulating through the bypass pipe (19) by the cooling water temperature adjustment unit (20) so that the temperature of steam after being expanded by the expansion machine (2) provided in the Rankine cycle apparatus (3) becomes 100°C or higher, based on the temperature of the steam measured by the measurement unit (13).

8. The combined power apparatus (1) according to claim 1, further comprising a generator (21) to which a rotational driving force generated by the expansion machine (2) provided in the Rankine cycle apparatus (3) and a rotational driving force generated by an expansion machine (8) provided in the binary cycle apparatus (4) are both transmitted.

9. A method of operating a combined power apparatus for generating power, using the combined power apparatus (1) according to any one of claims 1 to 8, the method comprising:
adjusting the amount of thermal energy recovered by the binary cycle apparatus (4) so that the temperature of steam after being expanded by the expansion machine (2) provided in the Rankine cycle apparatus (3) becomes 100°C or higher.

## Patentansprüche

1. Kombinierte Energieerzeugungsvorrichtung (1), die eine Rankine-Kreislaufvorrichtung (3), die mit einer Expansionsmaschine (2) versehen ist, die erzeugten Dampf expandiert, um Energie zu erzeugen, und eine Binärkreislaufvorrichtung (4) kombiniert, die thermische Energie zurückgewinnt, die in dem Dampf enthalten ist, der durch die in der Rankine-Kreislaufvorrichtung (3) vorgesehene Expansionsmaschine (2) expandiert wird, und die die zurückgewonnene thermische Energie nutzt, um Energie zu erzeugen, wobei die kombinierte Energieerzeugungsvorrichtung Folgendes umfasst:
eine Steuerung (12), um die Temperatur von Dampf, nachdem er durch die in der Rankine-Kreislaufvorrichtung (3) vorgesehene Expansionsmaschine (2) expandiert wurde, auf 100°C oder höher zu steuern, wobei
die Steuerung (12) eine Einstellsteuereinheit (15) umfasst, um die Menge thermischer Energie, die durch die Binärkreislaufvorrichtung (4) aus der Rankine-Kreislaufvorrichtung (3) zurückgewonnen wird, so einzustellen, dass die Temperatur des Dampfs, nachdem er durch die in der Rankine-Kreislaufvorrichtung (3) vorgesehene Expansionsmaschine (2) expandiert wurde, 100°C oder höher wird,
**dadurch gekennzeichnet, dass**
die Steuerung (2) außerdem eine Messeinheit (13) umfasst, um die Temperatur von Dampf zu messen, der auf der Auslassseite der in der Rankine-Kreislaufvorrichtung (3) vorgesehenen Expansionsmaschine (2) zirkuliert, und
die Einstellsteuereinheit (15) dazu im Stande ist, die Menge thermischer Energie, die durch die Binärkreislaufvorrichtung (4) aus der Rankine-Kreislaufvorrichtung (3) zurückgewonnen wird, beruhend auf der durch die Messeinheit (13) gemessenen Temperatur des Dampfes so einzustellen, dass die Temperatur von Dampf, nachdem er durch die in der Rankine-Kreislaufvorrichtung (3) vorgesehene Expansionsmaschine (2) expandiert wurde, 100°C oder höher wird.

2. Kombinierte Energieerzeugungsvorrichtung (1) nach Anspruch 1, wobei während des Betriebs
die in der Rankine-Kreislaufvorrichtung (3) vorgesehene Expansionsmaschine (2) erzeugten Dampf expandiert, wodurch sie eine Rotationsantriebskraft erzeugt; und
die Rankine-Kreislaufvorrichtung (3) mit einer Pumpe (7) versehen ist, um Dampf zurückzuführen, nachdem er durch die Expansionsmaschine (2) expandiert wurde.

3. Kombinierte Energieerzeugungsvorrichtung (1) nach Anspruch 1 oder 2, wobei die Binärkreislaufvorrichtung (4) Folgendes umfasst:
einen ersten Wärmetauscher (6), um Dampf, nachdem er durch die in der Rankine-Kreislaufvorrichtung (3) vorgesehene Expansionsmaschine (2) expandiert wurde, zu einer Primärseite zu führen, um ein Arbeitsmedium zu verdampfen, das einer Sekundärseite zugeführt wird;
einer Expansionsmaschine (8), um Dampf des Arbeitsmediums, das durch den ersten Wärmetauscher (6) verdampft wird, zu expandieren, um eine Rotationsantriebkraft zu erzeugen;
einen zweiten Wärmetauscher (11), um Dampf des Arbeitsmediums, der durch die Expansionsmaschine (8) der Binärkreislaufvorrichtung (4) expandiert wird, zu kühlen, um das Arbeitsmedium zu Flüssigkeit zu kondensieren; und
eine Pumpe (10), um das Arbeitsmedium vom zweiten Wärmetauscher (11) zum ersten Wärmetauscher (6) zurückzuführen.

4. Kombinierte Energieerzeugungsvorrichtung nach Anspruch 3, wobei die Steuerung (12) außerdem Folgendes umfasst:
eine Arbeitsmediumdurchflusseinstelleinheit (14), die dazu im Stande ist, die Durchflussmenge des Arbeitsmediums einzustellen, das durch die in der Binärkreislaufvorrichtung vorgesehene Pumpe (17) zirkuliert,
wobei die Einstellsteuereinheit (15) dazu im Stande ist, die Durchflussmenge des Arbeitsmediums, das durch die in der Binärkreislaufvorrichtung (4) vorgesehene Pumpe (10) zirkuliert, beruhend auf der durch die Messeinheit (13) gemessenen Temperatur des Dampfes so durch die Arbeitsmediumdurchflusseinstelleinheit (14) einzustellen, dass die Temperatur von Dampf, nachdem er durch die in der Rankine-Kreislaufvorrichtung (3) vorgesehene Expansionsmaschine (2) expandiert wurde, 100°C oder höher wird.

5. Kombinierte Energieerzeugungsvorrichtung (1) nach Anspruch 3, wobei die Steuerung (12) außerdem Folgendes umfasst:
eine Drehzahleinstelleinheit, die dazu im Stande ist, die Drehzahl der in der Binärkreislaufvorrichtung (4) vorgesehenen Expansionsmaschine (8) einzustellen,
wobei die Einstellsteuereinheit (15) dazu im Stande ist, die Drehzahl der in der Binärkreislaufvorrichtung (4) vorgesehenen Expansionsmaschine (8) beruhend auf der durch die Messeinheit (13) gemessenen Temperatur des Dampfes so durch die Drehzahleinstelleinheit einzustellen, dass die Temperatur von Dampf, nachdem er durch die in der Rankine-Kreislaufvorrichtung (3) vorgesehene Expansionsmaschine (2) expandiert wurde, 100°C oder höher wird.

6. Kombinierte Energieerzeugungsvorrichtung nach Anspruch 3, wobei die Steuerung (13) außerdem Folgendes umfasst:
eine Kühlwasser-Durchflusseinstelleinheit (18), um die Durchflussmenge von Kühlwasser einzustellen, das dem zweiten Wärmetauscher (11) der Binärkreislaufvorrichtung (4) zugeführt wird,
wobei die Einstellsteuereinheit (15) dazu im Stande ist, die Durchflussmenge des Kühlwassers, das dem zweiten Wärmetauscher (11) der Binärkreislaufvorrichtung (4) zugeführt wird, beruhend auf der durch die Messeinheit (13) gemessenen Temperatur des Dampfes so durch die Kühlwasser-Durchflusseinstelleinheit (18) einzustellen, dass die Temperatur von Dampf, nachdem er durch die in der Rankine-Kreislaufvorrichtung (3) vorgesehene Expansionsmaschine (2) expandiert wurde, 100°C oder höher wird.

7. Kombinierte Energieerzeugungsvorrichtung (1) nach Anspruch 3, wobei die Steuerung (12) außerdem Folgendes umfasst:
ein Umleitungsrohr (19), das einem Teil von Dampf, der durch die Rankine-Kreislaufvorrichtung (3) zirkuliert, erlaubt, sich mit Kühlwasser zu vereinen, das dem zweiten Wärmetauscher (11) der Binärkreislaufvorrichtung (4) zuzuführen ist, um die Temperatur des Kühlwassers zu ändern; und
eine Kühlwassertemperatureinstelleinheit (20), um die Durchflussmenge von Dampf einzustellen, der durch das Umleitungsrohr (19) zirkuliert und zur Kühlwasserseite zurückkehrt,
wobei die Einstellsteuereinheit (15) dazu im Stande ist, die Durchflussmenge von Dampf, der durch das Umleitungsrohr (19) zirkuliert, beruhend auf der durch die Messeinheit (13) gemessenen Temperatur des Dampfes so durch die Kühlwassertemperatureinstelleinheit (20) einzustellen, dass die Temperatur von Dampf, nachdem er durch die in der Rankine-Kreislaufvorrichtung (3) vorgesehene Expansionsmaschine (2) expandiert wurde, 100°C oder höher wird.

8. Kombinierte Energieerzeugungsvorrichtung (1) nach Anspruch 1, die außerdem einen Generator (21) umfasst, zu dem sowohl eine Rotationsantriebskraft, die durch die in der Rankine-Kreislaufvorrichtung (3) vorgesehene Expansionsmaschine (2) erzeugt wird, als auch eine Rotationsantriebskraft, die durch die in der Binärkreislaufvorrichtung (4) vorgesehene Expansionsmaschine (8) erzeugt wird, übertragen werden.

9. Verfahren zum Betrieb einer kombinierten Energieerzeugungsvorrichtung zum Erzeugen von Energie, das die kombinierte Energieerzeugungsvorrichtung (1) nach einem der Ansprüche 1 bis 8 nutzt, wobei das Verfahren Folgendes umfasst:
Einstellen der Menge thermischer Energie, die durch die Binärkreislaufvorrichtung (4) zurückgewonnen wird, sodass die Temperatur von Dampf, nachdem er durch die in der Rankine-Kreislaufvorrichtung (3) vorgesehene Expansionsmaschine (2) expandiert wurde, 100°C oder höher wird.

## Revendications

1. Appareil électrique combiné (1) qui combine un appareil à cycle Rankine (3) pourvu d'une machine de détente (2) qui détend la vapeur générée afin de générer de l'électricité, et un appareil à cycle binaire (4) qui récupère l'énergie thermique contenue dans la vapeur détendue par la machine de détente (2) prévue dans l'appareil à cycle Rankine (3), et qui utilise l'énergie thermique récupérée pour générer de l'électricité, l'appareil électrique combiné comprenant :
un dispositif de commande (12) pour commander la température de vapeur, après qu'elle a été détendue par la machine de détente (2) prévue dans l'appareil à cycle Rankine (3), à 100°C ou plus haut, dans lequel
le dispositif de commande (12) comprend une unité de commande de réglage (15) pour régler la quantité d'énergie thermique récupérée à partir de l'appareil à cycle Rankine (3) par l'appareil à cycle binaire (4), de sorte que la température de la vapeur, après qu'elle a été détendue par la machine de détente (2) prévue dans l'appareil à cycle Rankine (3), soit de 100°C ou plus élevée,
**caractérisé en ce que**
le dispositif de commande (12) comprend en outre une unité de mesure (13) pour mesurer la température de la vapeur circulant du côté sortie de la machine de détente (2) prévue dans l'appareil à cycle Rankine (3), et
l'unité de commande de réglage (15) est capable de régler la quantité d'énergie thermique récupérée à partir de l'appareil à cycle Rankine (3) par l'appareil à cycle binaire (4), de sorte que la température de la vapeur, après qu'elle a été détendue par la machine de détente (2) prévue dans l'appareil à cycle Rankine (3), soit de 100°C ou plus élevée, sur la base de la température de la vapeur mesurée par l'unité de mesure (13).

2. Appareil électrique combiné (1) selon la revendication 1, dans lequel, en cours de fonctionnement,
la machine de détente (2) prévue dans l'appareil à cycle Rankine (3) détend la vapeur générée, générant ainsi une force motrice de rotation ; et
l'appareil à cycle Rankine (3) est pourvu d'une pompe (7) pour renvoyer la vapeur après qu'elle a été détendue par la machine de détente (2).

3. Appareil électrique combiné (1) selon la revendication 1 ou 2, dans lequel l'appareil à cycle binaire (4) comprend :
un premier échangeur de chaleur (6) pour guider la vapeur, après qu'elle a été détendue par la machine de détente (2) prévue dans l'appareil à cycle Rankine (3), vers un côté primaire pour l'évaporation d'un milieu de travail alimentant un côté secondaire ;
une machine de détente (8) pour détendre la vapeur du milieu de travail évaporé par le premier échangeur de chaleur (6) pour générer une force motrice de rotation ;
un second échangeur de chaleur (11) pour refroidir la vapeur du milieu de travail détendue par la machine de détente (8) de l'appareil à cycle binaire (4), afin de condenser le milieu de travail en liquide ; et
une pompe (10) pour renvoyer le milieu de travail du second échangeur de chaleur (11) au premier échangeur de chaleur (6).

4. Appareil électrique combiné selon la revendication 3, dans lequel le dispositif de commande (12) comprend en outre :
une unité de réglage d'écoulement de milieu de travail (14) capable de régler le débit du milieu de travail circulant à travers la pompe (17) prévue dans l'appareil à cycle binaire,
dans lequel l'unité de commande de réglage (15) est capable de régler le débit du milieu de travail circulant à travers la pompe (10) prévue dans l'appareil à cycle binaire (4) par l'unité de réglage d'écoulement de milieu de travail (14), de sorte que la température de la vapeur, après qu'elle a été détendue par la machine de détente (2) prévue dans l'appareil à cycle Rankine (3), soit de 100°C ou plus élevée, sur la base de la température de la vapeur mesurée par l'unité de mesure (13).

5. Appareil électrique combiné (1) selon la revendication 3, dans lequel le dispositif de commande (12) comprend en outre :
une unité de réglage de vitesse de rotation capable de régler la vitesse de rotation de la machine de détente (8) prévue dans l'appareil à cycle binaire (4),
dans lequel l'unité de commande de réglage (15) est capable de régler la vitesse de rotation de la machine de détente (8) prévue dans l'appareil à cycle binaire (4) par l'unité de réglage de vitesse de rotation, de sorte que la température de la vapeur, après qu'elle a été détendue par la machine de détente (2) prévue dans l'appareil à cycle Rankine (3), soit de 100°C ou plus élevée, sur la base de la température de la vapeur mesurée par l'unité de mesure (13).

6. Appareil électrique combiné (1) selon la revendication 3, dans lequel le dispositif de commande (13) comprend en outre :
une unité de réglage d'écoulement d'eau de refroidissement (18) pour régler le débit d'eau de refroidissement alimentant le second échangeur de chaleur (11) de l'appareil à cycle binaire (4) ,
dans lequel l'unité de commande de réglage (15) est capable de régler le débit de l'eau de refroidissement alimentant le second échangeur de chaleur (11) de l'appareil à cycle binaire (4) par l'unité de réglage d'écoulement d'eau de refroidissement (18), de sorte que la température de la vapeur, après qu'elle a été détendue par la machine de détente (2) prévue dans l'appareil à cycle Rankine (3), soit de 100°C ou plus élevée, sur la base de la température de la vapeur mesurée par l'unité de mesure (13).

7. Appareil électrique combiné (1) selon la revendication 3, dans lequel le dispositif de commande (12) comprend en outre :
un tuyau de dérivation (19) qui permet à une partie de la vapeur circulant à travers l'appareil à cycle Rankine (3) de fusionner avec l'eau de refroidissement devant alimenter le second échangeur de chaleur (11) de l'appareil à cycle binaire (4) pour modifier la température de l'eau de refroidissement ; et
une unité de réglage de température d'eau de refroidissement (20) pour régler le débit de la vapeur circulant à travers le tuyau de dérivation (19) et la renvoyer vers le côté d'eau de refroidissement,
dans lequel l'unité de commande de réglage (15) est capable de régler le débit de la vapeur circulant à travers le tuyau de dérivation (19) par l'unité de réglage de température d'eau de refroidissement (20), de sorte que la température de la vapeur, après qu'elle a été détendue par la machine de détente (2) prévue dans l'appareil à cycle Rankine (3), soit de 100°C ou plus élevée, sur la base de la température de la vapeur mesurée par l'unité de mesure (13).

8. Appareil électrique combiné (1) selon la revendication 1, comprenant en outre un générateur (21) auquel une force motrice de rotation générée par la machine de détente (2) prévue dans l'appareil à cycle Rankine (3) et une force motrice de rotation générée par une machine de détente (8) prévue dans l'appareil à cycle binaire (4) sont toutes deux transmises.

9. Procédé de fonctionnement d'un appareil électrique combiné pour générer de l'électricité, en utilisant l'appareil électrique combiné (1) selon l'une quelconque des revendications 1 à 8, le procédé comprenant :
le réglage de la quantité d'énergie thermique récupérée par l'appareil à cycle binaire (4) de sorte que la température de la vapeur, après qu'elle a été détendue par la machine de détente (2) prévue dans l'appareil à cycle Rankine (3), soit de 100°C ou plus élevée.
